# EUROPÄISCHE PATENTANMELDUNG

(11) **EP 0 944 155 A2**
(43) Veröffentlichungstag der Anmeldung: **22.09.1999**
(21) Anmeldenummer: 99810201.6
(22) Anmeldetag: 08.03.1999
(51) Int. Cl.: H02J 9/06

(54) **Schneller Trenner in Halbleitertechnologie**

(30) Priorität: 20.03.1998 DE 19812341
(71) Anmelder: Asea Brown Boveri AG, 5401 Baden (CH)
(72) Erfinder: Dähler, Peter, 5236 Remigen (CH); Grüning, Horst, 5430 Wettingen (CH)
(74) Vertreter: Clerc, Natalia

(57) **Zusammenfassung**

Es wird ein Trenner zum Abkoppeln einer Last von einem speisenden Wechselspannungsnetz angegeben. Der Trenner umfasst einen Transformator, der primärseitig in das Wechselspannungsnetz eingeschaltet ist. Sekundärseitig ist eine Gleichrichterschaltung vorgesehen, an die ein Abschaltthyristor angeschlossen ist. Im Normalbetrieb wird der Abschaltthyristor geschlossen gehalten, so dass das Netz die Last speist. Bei Netzstörungen oder Unterbrüchen wird der Abschaltthyristor geöffnet, wodurch das Netz durch die Transformatorimpedanz von der Last getrennt wird.

## Beschreibung

### Technisches Gebiet

Die Erfindung bezieht sich auf das Gebiet der Leistungselektronik. Sie geht aus von einem schnellen Trenner in Halbleitertechnologie nach dem Oberbegriff des ersten Anspruchs, insbesondere geeignet für unterbrechungsfreie Stromversorgungen einer von einem Wechselspannungsnetz gespeiste Last. Ein gattungsgemässer Trenner wird beispielsweise in der französischen Patentanmeldung FR 2 666 941 A1 beschrieben.

### Stand der Technik

Gattungsgemässe Trenner dienen zum Abkoppeln der Last von einem speisenden Wechselspannungsnetz. Sie können insbesondere für unterbrechungsfreie Stromversorgungen eingesetzt werden. Unterbrechungsfreie Stromversorgungen weisen eine Hilfsspannungsquelle auf, die nach der Trennung der Last von dem Wechselspannungsnetz mit Hilfe von Ankopplungsmitteln an die Last angekoppelt werden kann. Die Hilfsspannungsquelle kann beispielsweise eine Batterie, deren Gleichspannung mittels eines Stromrichters in eine Wechselspannung umgewandelt wird, ein Dieselaggregat oder ein rotierendes System, bei dem die Schwungenergie eines Generators ausgenützt wird, umfassen.

Insbesondere bei sensitiven Verbrauchern wie EDV-Systemen oder elektronischen Einrichtungen in Krankenhäusern kommen in der Regel schnelle unterbrechungsfreie Stromversorgungen mit Reaktionszeiten im Bereich von Millisekunden zum Einsatz. Auf diese Weise kann sichergestellt werden, dass jede Art von transienten Störungen und kurzfristigen Spannungseinbrüchen abgefangen werden kann, so dass dem Verbraucher stets eine unterbrechungsfreie Wechselspannung zur Verfügung steht. Der Leistungsbedarf solcher Verbraucher übersteigt im Normalfall einige 10 kW nicht. Deshalb können Geräte mit Leistungstransistoren oder IGBTs als Trenner zum Einsatz kommen.

Für sensitive Verbraucher mit höherem Leistungsbedarf (z.B. 0,5 - 2 MW) werden heute Lösungen mit rotierenden Umformern bevorzugt. Die Schwungenergie eines Generators wird dabei benützt, um ms-Einbrüche abzufangen. Dauert die Störung länger, wird weitere Trägheitsmasse mittels einer dynamischen Kupplung hinzugeschaltet. Ausserdem kann ein Dieselaggregat aufgestartet und hinzugeschaltet werden, um auch minutenlange Störungen zu überbrücken. Solche rotierenden Systeme gehören seit Jahren zum Stand der Technik und haben sich grundsätzlich bewährt. Aufgrund der aufwendigen Mechanik und des teilweise erforderlichen Dauerbetrie-bes der Anlage benötigen sie jedoch einen hohen Wartungsaufwand und weisen markante Verluste auf. Für Leistungen über 2 MW müssen zudem mehrere System parallelgeschaltet werden.

Eine Übertragung der bekannten elektronischen Schaltungen auf Anwendungen hoher Leistungen ist bis jetzt aus wirtschaftlichen und technischen Gründen nicht möglich.

### Darstellung der Erfindung

Aufgabe der Erfindung ist es deshalb, einen schnellen Trenner in Halbleitertechnologie anzugeben, welcher für höchste Leistungen geeignet ist, zuverlässig und möglichst wartungsfrei arbeitet und eine Last innerhalb von Millisekunden von dem speisenden Wechselspannungsnetz zu trennen vermag. Diese Aufgabe wird durch die Merkmale der unabhängigen Ansprüche gelöst.

Kern der Erfindung ist es also, dass der Trenner einen primärseitig in Serie in das Wechselspannungsnetz eingeschalteten Transformator umfasst, an welchen sekundärseitig ein Abschaltthyristor unter Zwischenschaltung einer ungesteuerten Gleichrichterschaltung angeschlossen ist. Der Abschaltthyristor wird vorzugsweise hart angesteuert.

Die Hilfswechselspannung umfasst vorzugsweise eine Gleichspannungsquelle, die mit Hilfe eines Stromrichters in eine Wechselspannung umgewandelt wird. Einen besonders vorteilhaften Aufbau erhält die erfindungsgemässe Stromversorgung dadurch, dass der Stromrichter ebenfalls mit hart angesteuerten Abschaltthyristoren ausgerüstet ist.

Weitere vorteilhafte Ausführungsformen ergeben sich aus den entsprechenden abhängigen Ansprüchen.

Die Vorteile der Erfindung sind insbesondere darin zu sehen, dass der elektronische Trenner auch für höchste Leistungen geeignet ist. Er ist genügend schnell, um kurzzeitige Spannungseinbrüche und Transiente abzufangen. Die Verwendung von hart angesteuerten Abschaltthyristoren erlaubt zudem ein Reduktion des Beschaltungs-aufwandes.

### Kurze Beschreibung der Zeichnungen

Nachfolgend wird die Erfindung anhand von Ausführungsbeispielen im Zusammenhang mit den Zeichnungen näher erläutert.

Es zeigen:
**Fig. 1** Ein Blockschaltbild einer ersten Ausführungsform der Erfindung;
**Fig. 2** Ein Blockschaltbild einer zweiten Ausführungsform der Erfindung.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### Wege zur Ausführung der Erfindung

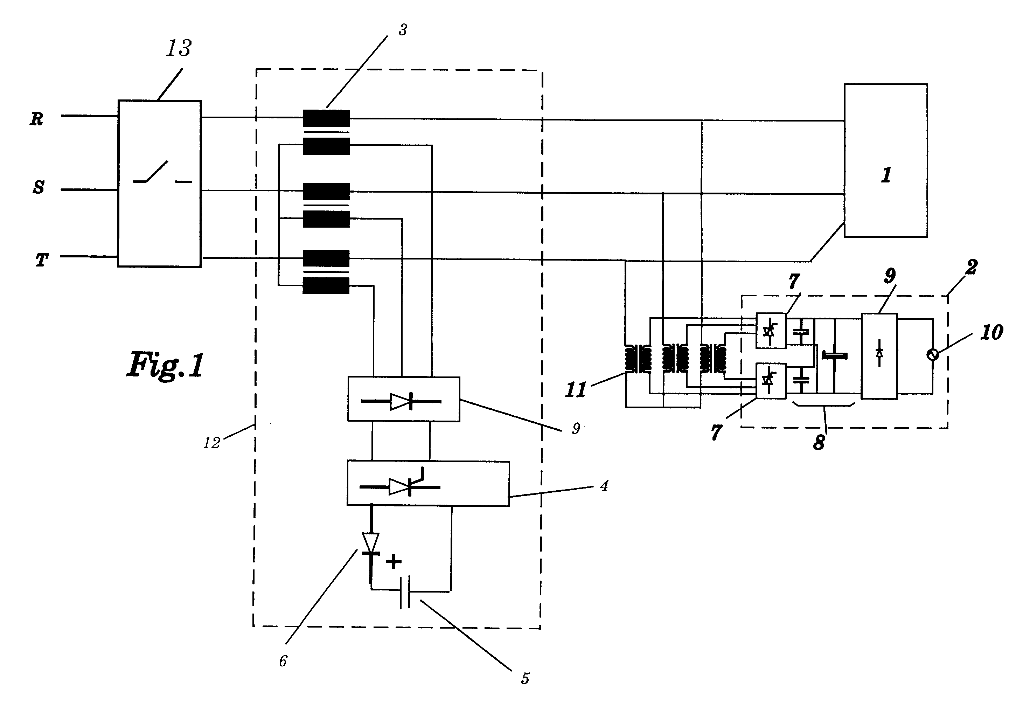

Figur 1 zeigt ein Ausführungsbeispiel der Erfindung. Mit R, S, T ist ein Wechselspannungsnetz bezeichnet, an das eine Last 1 angeschlossen ist. Bei der Last handelt es sich insbesondere um eine sensitive elektrotechnische Anlage höchster Leistung, die gegen Störungen und Ausfälle des Wechselspannungsnetzes geschützt werden muss. Zu diesem Zweck ist eine Hilfsspannungsquelle 2 vorgesehen, die bedarfsweise an die Last 1 angekoppelt werden kann. Zur Ankopplung kann ein dreiphasiger Transformator 11 vorgesehen sein. Die Hilfsspannungsquelle 2 umfasst beispielsweise eine Wechselspannungsquelle 10, die mit Hilfe eines Gleichrichters 9 und Zwischenkreiskondensatoren 8 in eine Gleichspannungsquelle umgewandelt wird. Die Gleichspannung wird dann mit Hilfe der Stromrichter 7 wiederum in eine Wechselspannung umgewandelt und über den Transformator 11 an die Last 1 weitergegeben.

Damit die Last 1 von dem Wechselspannungsnetz (R, S, T) abgekoppelt werden kann, ist ein elektronischer Trenner 12 vorgesehen, der in der Lage sein muss, den Stromfluss zwischen dem Netz und dem Verbraucher 1 zuverlässig und schnell zu unterbrechen. Nach der Erfindung umfasst der Trenner 12 einen Transformator 3, der mit seinen Primärwicklungen in das Netz R, S, T eingeschaltet ist. Sekundärseitig wird die Spannung mit Hilfe eines Gleichrichters 9 gleichgerichtet. Zur Abtrennung des Netzes von der Last 1 ist nun ein Abschaltthyristor 4 vorgesehen, der an die Ausgänge der Gleichrichterschaltung 9 angeschlossen ist. Im Normalbetrieb, d.h. bei einer Speisung der Last 1 durch das Wechselspannungsnetz R, S, T, wird der Schalter 4 leitend gehalten. Damit ist die Sekundärseite des Transformators 3 kurzgeschlossen, und die Primärseite verbindet das Netz R, S, T mit der Last 2. Bei Netzstörungen oder Unterbrüchen wird der Schalter 4 geöffnet. Der Ausgang der Gleichrichterschaltung 9 nimmt Spannung auf, und der sekundärseitige Transformator-kurzschluss wird aufgehoben. In der Folge wird die Last 1 von dem Netz durch die Transformatorleerlaufimpedanz getrennt, und die Hilfsspannungsquelle 2 kann die Speisung der Last übernehmen. Nach Abtrennen der Last 1 von dem Netz R, S, T kann der mechanische Trenner 13 betätigt werden, der das Netz vollständig abtrennt.

In einer bevorzugten Ausführungsform wird dem Abschaltthyristor 4 ein Clampkreis mit einer Diode 6 und einem Kondensator 5 zugeordnet. Der Clampkreis dient dem Überführen von überschüssiger Energie in den Hauptstromkreis. Energie, die in netzseitigen Induktivitäten gespeichert ist, kann dadurch wirksam abgeführt werden, so dass der Trenner 12 jederzeit und insbesondere auch bei Überströmen geöffnet werden kann.

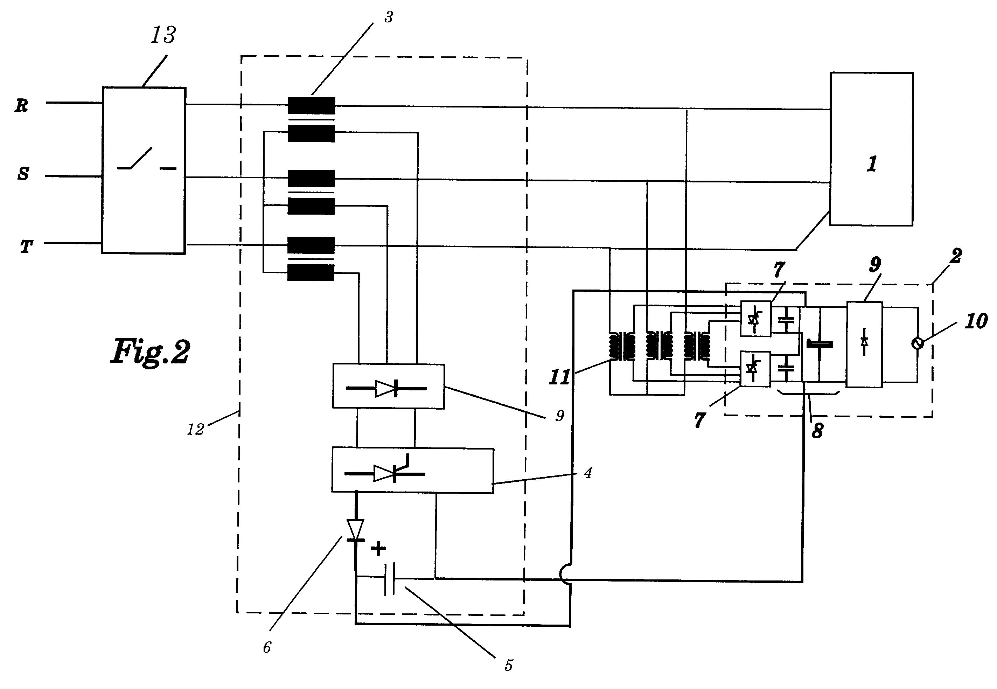

Nach dem zweiten Ausführungsbeispiel, das in Figur 2 dargestellt ist, wird der Clampkreis potentialmässig an die Gleichspannung der Hilfsspannungsquelle gekoppelt. Dadurch kann die Kapazität des Kondensators 5 kleiner gewählt werden, bzw. der Kondensator 5 kann völlig weggelassen werden, denn die benötigte Kapazität wird durch den Zwischenkreis 8 der Hilfsquelle 2 zur Verfügung gestellt. Selbstverständlich muss das Übersetzungsverhältnis des Transformators 3 in diesem Fall angepasst werden.

Die Erfindung stellt natürlich recht hohe Anforderungen an den Transformator 3. Dieser muss hoch ausgelegt werden, denn im leitenden Zustand des Abschaltthyri-stors 4 muss er den vollen Laststrom tragen, und beim Sperren muss er in der Lage sein, ohne Sättigungserscheinungen zu jedem Zeitpunkt Spannung übernehmen zu können. Deshalb wird seine Spannungsauslegung etwa den doppelten Wert herkömmlicher Transformatoren benötigen.

Die Abschaltthyristor 4 wird vorzugsweise hart angesteuert. Die Reaktionszeit der Abschaltthyristoren 4 wird dadurch verkleinert. Insgesamt ergibt sich mit der Erfindung einen Trenner bzw. eine unterbrechungsfreie Stromversorgung, die auch für sensitive Lasten höchster Leistung geeignet ist. Ein Vorteil besteht besonders darin, dass der Trenner genügend schnell schaltet, dass das Netz anschliessend "in Ruhe" mit Hilfe eines zusätzlichen mechanischen Schalters 13 von der Last abgetrennt werden kann.

### Bezugszeichenliste

R, S, T Wechselspannungsnetz
1 Last
2 Hilfsspannungsquelle
3 Transformator
4 Abschaltthyristor
5 Kondensator
6 Diode
7 Stromrichter
8 Zwischenkreiskondensatoren
9 Gleichrichter
10 Wechselspannungsquelle
11 Koppeltransformator
12 Trenner
13 mechanischer Trenner

## Patentansprüche

1. Schneller Trenner zum Trennen einer Last (1) von einem speisenden Wechselspannungsnetz (R, S, T), dadurch gekennzeichnet, dass der Trenner (12) einen primärseitig in das Wechselspannungsnetz (R, S, T) eingeschalteten Transformator (3) umfasst, an welchen sekundärseitig über eine Gleichrichterschaltung (9) ein Abschaltthyristor (4) angeschlossen ist.

2. Trenner nach Anspruch 1, dadurch gekennzeichnet, dass parallel zu der dem Abschaltthyristor (4) eine Serieschaltung einer Diode (6) und eines Kondensators (5) geschaltet ist.

3. Trenner nach einem der Ansprüche 1 bis 2, dadurch gekennzeichnet, dass der Abschaltthyristor (4) hart angesteuert wird.

4. Unterbrechungsfreie Stromversorgung für eine von einem Wechselspannungsnetz (R, S, T) gespeiste Last (1), umfassend einen Trenner (12) zum Abkoppeln der Last (1) von dem Wechselspannungsnetz, eine Hilfswechselspannungsquelle (2) sowie Mittel (11) zum Ankoppeln der Hilfswechselspannung an die Last, dadurch gekennzeichnet, dass der Trenner (12) einen primärseitig in das Wechselspannungsnetz (R, S, T) eingeschalteten Transformator (3) umfasst, an welchen sekundärseitig über eine Gleichrichterschaltung (9) ein Abschaltthyristor (4) angeschlossen ist.

5. Unterbrechungsfreie Stromversorgung nach Anspruch 4, dadurch gekennzeichnet, dass die Hilfswechselspannungsquelle (2) mit Hilfe eines weiteren Transformators (11) an die Last (1) angekoppelt wird und dass die Hilfswechselspannungsquelle (2) eine Gleichspannungsquelle (8, 9) umfasst, die mittels eines Stromrichters (7) in eine Wechselspannung umgewandelt wird, wobei der Stromrichter (*7*) Abschaltthyristoren aufweist, die hart angesteuert werden.
